# EUROPEAN PATENT SPECIFICATION

(11) **EP 4 254 716 B1**
(45) Date of publication and mention of the grant of the patent: **03.07.2024**
(21) Application number: 22213958.6
(22) Date of filing: 22.03.2022
(51) Int. Cl.: H02J 7/00

(54) **BATTERY CHARGE AND DISCHARGE PROTECTION DEVICE AND METHOD**
VORRICHTUNG UND VERFAHREN ZUM SCHUTZ VOR LADUNG UND ENTLADUNG EINER BATTERIE
DISPOSITIF ET PROCÉDÉ DE PROTECTION CONTRE LA CHARGE ET LA DÉCHARGE D'UNE BATTERIE

(43) Date of publication of application: 04.10.2023
(62) Divisional of application: 22163554.3
(73) Proprietor: Mipro Electronics Co., Ltd., Chiayi City 600 (TW)
(72) Inventor: Tsai, Yi-Nan, Chiayi City 600 (TW)
(74) Representative: Taruttis, Tilman

(56) References cited:
- US-A1- 2016 219 664
- US-A1- 2021 218 251
- US-A1- 2021 376 648

## Description

The disclosure relates to battery charge and discharge techniques, and more particularly to a battery charge and discharge protection device.

Batteries can be classified into two types: non-rechargeable batteries (e.g., zinc-carbon batteries) and rechargeable batteries (e.g., lithium-ion batteries). For use in various electronic products, the rechargeable batteries are usually designed to be in standardized sizes such as AA size, or AAA size, etc., as are the non-rechargeable batteries. Therefore, many users often cannot discern which type of battery is being used, and may accidentally use batteries of different types together in a single electronic product.

When installing batteries in an electronic product, all of the batteries should be correctly installed, otherwise the batteries may discharge abnormally and may even cause damage to the electronic product. In addition, power management modules in many electronic products are designed to allow batteries to supply power while being charged at the same time. Once batteries of different types are installed in a single electronic product and the electronic product is coupled to a charger device for charging, the non-rechargeable battery(ies) and the rechargeable battery(ies) would be charged at the same time. This may greatly affect the charge efficiency of the rechargeable battery(ies), and may cause the non-rechargeable battery(ies) to explode because of overheating.

Therefore, an object of the disclosure is to provide a battery charge and discharge protection device that can alleviate at least one drawback of the prior art.

Prior art document US 2021/218251 A1 discloses circuitry to connect a plurality of batteries and adapted to couple the batteries in series or parallel to a load or charger.

Prior art document US 2016/219664 A1 discloses means to detect if the installed batteries are rechargeable or non-rechargeable batteries.

Prior art document US 2021/376648 A1 discloses a battery polarity detecting unit and means preventing battery connection in case of reverse polarity.

According to the disclosure, the battery charge and discharge protection device is adapted to be coupled to a load device and a charger device, and is adapted to be installed with two batteries. The battery charge and discharge protection device includes a battery polarity detecting unit, a battery type detecting unit and a charge and discharge control unit. The battery polarity detecting unit is adapted to be coupled to the batteries, and is configured to detect, with respect to each of the batteries, whether the battery is correctly installed or reversely installed, so as to generate a first detection result. The battery type detecting unit is disposed and configured to detect, with respect to each of the batteries, whether the battery is rechargeable or non-rechargeable, so as to generate a second detection result. The charge and discharge control unit is coupled to the battery polarity detecting unit and the battery type detecting unit to receive the first and second detection results, and is adapted to be further coupled to the load device, the charger device and the batteries. When the charge and discharge control unit determines based on the first detection result that at least one of the batteries is reversely installed, the charge and discharge control unit disables power transfer from the batteries to the load device, and disables power transfer from the charger device to the batteries. When the charge and discharge control unit determines based on the first detection result that both of the batteries are correctly installed and determines based on the second detection result that both of the batteries are rechargeable, the charge and discharge control unit connects the batteries in parallel, enables power transfer from the batteries that have been connected in parallel to the load device, and enables power transfer from the charger device to the batteries that have been connected in parallel. When the charge and discharge control unit determines based on the first detection result that both of the batteries are correctly installed and determines based on the second detection result that only one of the batteries is rechargeable, the charge and discharge control unit enables power transfer from the battery that is determined to be rechargeable to the load device, and enables power transfer from the charger device to the battery that is determined to be rechargeable.

Other features and advantages of the disclosure will become apparent in the following detailed description of the embodiments with reference to the accompanying drawings, of which:
FIG. 1 is a block diagram illustrating a first embodiment of a battery charge and discharge protection device according to the disclosure;
FIG. 2 is a circuit block diagram illustrating the first embodiment;

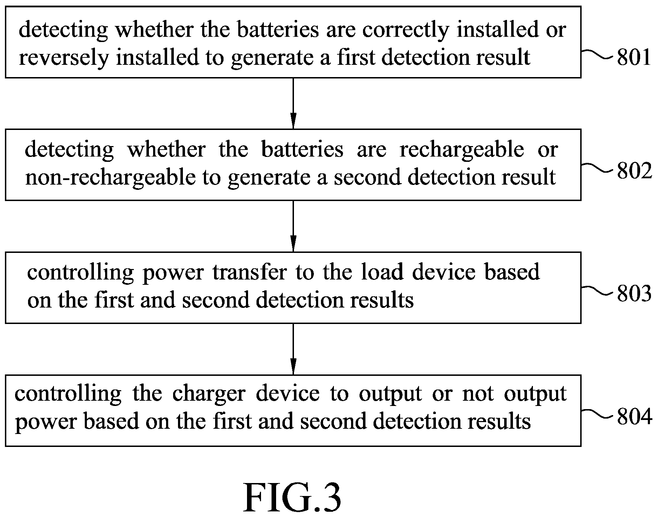

FIG. 3 is a flow chart illustrating a battery charge and discharge protection method performed by the first embodiment;
FIG. 4 is a block diagram illustrating a second embodiment of the battery charge and discharge protection device according to the disclosure; and
FIG. 5 is a circuit block diagram illustrating the second embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

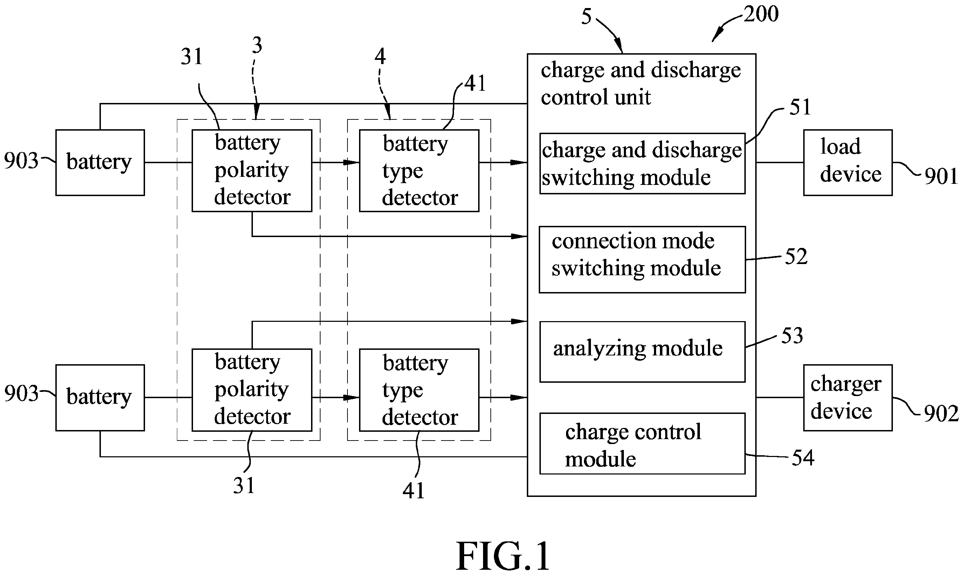

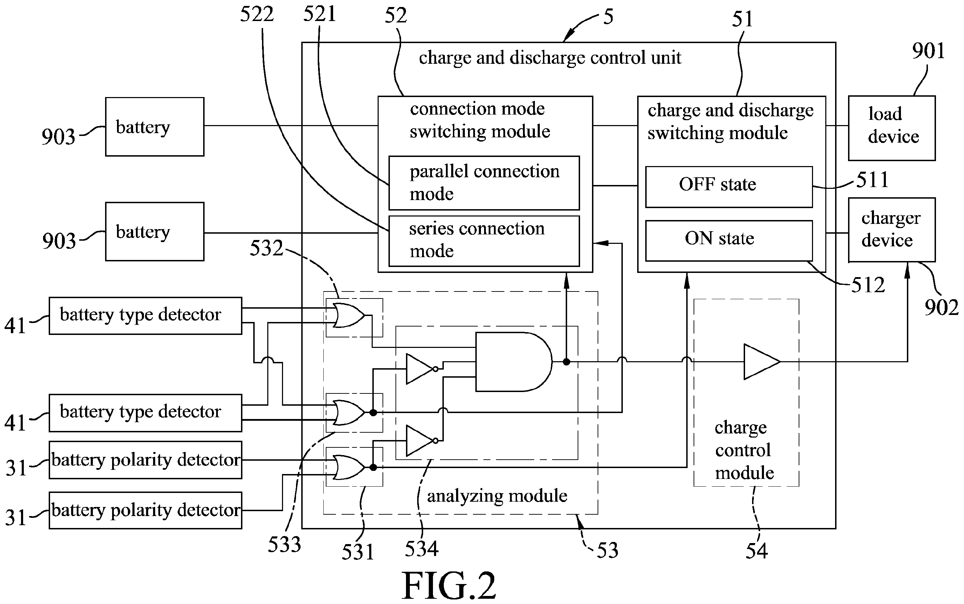

Referring to FIGS. 1 and 2, a first embodiment of a battery charge and discharge protection device 200 according to the disclosure is adapted to be coupled to a load device 901 and a charger device 902, and is adapted to be installed with two or more batteries 903. Each of the batteries 903 may be non-rechargeable or rechargeable. The battery charge and discharge protection device 200 controls power transfer among the load device 901, the charger device 902 and the batteries 903 based on detection results of, with respect to each of the batteries 903, whether the battery 903 is correctly installed or reversely installed and whether the battery 903 is rechargeable or non-rechargeable. The battery charge and discharge protection device 200 may be integrated with the load device 901 in an electronic product such as a speaker or a microphone, but the disclosure is not limited to such configurations. For illustration purposes, the battery charge and discharge protection device 200 is installed with two batteries 903 in this embodiment.

The battery charge and discharge protection device 200 includes a battery polarity detecting unit 3 that is adapted to be coupled to the batteries 903, a battery type detecting unit 4 that is coupled to the battery polarity detecting unit 3, and a charge and discharge control unit 5 that is coupled to the battery polarity detecting unit 3 and the battery type detecting unit 4 and that is adapted to be further coupled to the load device 901, the charger device 902 and the batteries 903. In an example, the battery charge and discharge protection device 200 further includes a battery holder (not shown) for accommodating the batteries 903, and the battery polarity detecting unit 3 and the charge and discharge control unit 5 are coupled to the batteries 903 via the battery holder. Since there are many ways to implement the battery holder, and since the salient features of the disclosure does not reside in the battery holder, details of the battery holder are omitted herein for the sake of brevity.

The battery polarity detecting unit 3 includes two battery polarity detectors 31 that respectively correspond to the batteries 903. The battery type detecting unit 4 includes two battery type detectors 41 that respectively correspond to the batteries 903. With respect to each of the batteries 903, the corresponding battery polarity detector 31 is coupled to the battery 903, and the corresponding battery type detector 41 is coupled to the corresponding battery polarity detector 31.

With respect to each of the batteries 903, the corresponding battery polarity detector 31 detects whether the battery 903 is correctly installed or reversely installed to generate a first detection signal, and connects the battery 903 to or disconnects the battery 903 from the corresponding battery type detector 41 based on the first detection signal. When the corresponding battery polarity detector 31 determines that the battery 903 is reversely installed, the corresponding battery polarity detector 31 causes the first detection signal to be at, for example, a logic "1" level, and disconnects the battery 903 from the corresponding battery type detector 41. When the corresponding battery polarity detector 31 determines that the battery 903 is correctly installed, the corresponding battery polarity detector 31 causes the first detection signal to be at, for example, a logic "0" level, and connects the battery 903 to the corresponding battery type detector 41. The first detection signals that are respectively generated by the battery polarity detectors 31 collectively constitute a first detection result.

Since there are many existing ways to implement the battery polarity detectors 31 (e.g., using diode circuits or transistor circuits to determine the polarities of the batteries 903), details of the battery polarity detectors 31 are omitted herein for the sake of brevity.

With respect to each of the batteries 903, the corresponding battery type detector 41, when being connected to the battery 903 by the corresponding battery polarity detector 31, detects whether the battery 903 is rechargeable or non-rechargeable to generate a type detection output. The type detection output includes a second detection signal, and an inverted second detection signal that is complementary to the second detection signal. When the corresponding battery type detector 41 determines that the battery 903 is rechargeable, the corresponding battery type detector 41 causes the second detection signal to be at, for example, a logic "1" level, and causes the inverted second detection signal to be at, for example, a logic "0" level. When the corresponding battery type detector 41 determines that the battery 903 is non-rechargeable, the corresponding battery type detector 41 causes the second detection signal to be at, for example, a logic "0" level, and causes the inverted second detection signal to be at, for example, a logic "1" level. The type detection outputs that are respectively generated by the battery type detectors 41 collectively constitute a second detection result.

A voltage across a rechargeable battery is different from a voltage across a non-rechargeable battery in magnitude. For example, a voltage across a non-rechargeable zinc-carbon battery has a magnitude that falls within a range of from 0.6V to 1.5V, and a voltage across a rechargeable lithium-ion battery has a magnitude that falls within a range of from 3V to 4.2V. In this embodiment, each of the battery type detectors 41 detects a voltage across the corresponding battery 903, and determines, based on the voltage thus detected, whether the corresponding battery 903 is rechargeable or non-rechargeable. However, the disclosure is not limited to such a configuration. Since there are many other ways to implement the battery type detectors 41, and since the important features of the disclosure do not reside in the implementation of the battery type detectors 41, other details of the battery type detectors 41 are omitted herein for the sake of brevity.

The charge and discharge control unit 5 includes a charge and discharge switching module 51, a connection mode switching module 52, an analyzing module 53 and a charge control module 54.

The charge and discharge switching module 51 is adapted to be coupled to the load device 901 and the charger device 902, and is operable in a plurality of states that include an OFF state 511 and an ON state 512.

The connection mode switching module 52 is adapted to be coupled to the batteries 903, is further coupled to the charge and discharge switching module 51, and is operable in a plurality of connection modes that include a parallel connection mode 521 and a series connection mode 522.

The charge and discharge switching module 51 performs the following: (a) when operating in the OFF state 511, preventing transmission of power that is received from the connection mode switching module 52 to the load device 901; and (b) when operating in the ON state 512, permitting transmission of power that is received from the connection mode switching module 52 to the load device 901 and transmission of power that is received from the charger device 902 to the connection mode switching module 52.

The connection mode switching module 52 performs the following: (a) when operating in the parallel connection mode 521, connecting the batteries 903 in parallel, and permitting transmission of power that is received from the parallel connected batteries 903 to the charge and discharge switching module 51 and transmission of power that is received from the charge and discharge switching module 51 to the parallel connected batteries 903; and (b) when operating in the series connection mode 522, connecting the batteries 903 in series, and permitting transmission of power that is received from the series connected batteries 903 to the charge and discharge switching module 51.

The analyzing module 53 is coupled to the battery polarity detecting unit 3 and the battery type detecting unit 4 to receive the first and second detection results, and is further coupled to the charge and discharge switching module 51 and the connection mode switching module 52. Based on analysis of the first and second detection results, the analyzing module 53 controls switching of the charge and discharge switching module 51 between the OFF state 511 and the ON state 512 and switching of the connection mode switching module 52 between the parallel connection mode 521 and the series connection mode 522.

The analyzing module 53 includes a first logic circuit 531, a second logic circuit 532, a third logic circuit 533 and a fourth logic circuit 534.

The first logic circuit 531 is coupled to the battery polarity detectors 31 to receive the first detection signals, is further coupled to the charge and discharge switching module 51, and generates, based on the first detection signals, a first logic signal that indicates whether both of the batteries 903 are correctly installed and that is for receipt by the charge and discharge switching module 51. The first logic signal causes the charge and discharge switching module 51 to operate in the ON state 512 when indicating that both of the batteries 903 are correctly installed, and causes the charge and discharge switching module 51 to operate in the OFF state 511 when indicating that the batteries 903 are not both correctly installed (i.e., at least one of the batteries 903 is reversely installed). In this embodiment, the first logic circuit 531 includes an OR gate. The OR gate has two input terminals that are respectively coupled to the battery polarity detectors 31 to respectively receive the first detection signals, and an output terminal that is coupled to the charge and discharge switching module 51 and that provides the first logic signal. When any one of the first detection signals is at the logic "1" level, the first logic signal is at a logic "1" level to indicate that the batteries 903 are not both correctly installed. When both of the first detection signals are at the logic "0" level, the first logic signal is at a logic "0" level to indicate that both of the batteries 903 are correctly installed.

The second logic circuit 532 is coupled to the battery type detectors 41 to receive the second detection signals, and generates, based on the second detection signals, a second logic signal that indicates whether both of the batteries 903 are non-rechargeable. In this embodiment, the second logic circuit 532 includes an OR gate. The OR gate has two input terminals that are respectively coupled to the battery type detectors 41 to respectively receive the second detection signals, and an output terminal that provides the second logic signal. When any one of the second detection signals is at the logic "1" level, the second logic signal is at a logic "1" level to indicate that the batteries 903 are not both non-rechargeable (i.e., at least one of the batteries 903 is rechargeable). When both of the second detection signals are at the logic "0" level, the second logic signal is at a logic "0" level to indicate that both of the batteries 903 are non-rechargeable.

The third logic circuit 533 is coupled to the battery type detectors 41 to receive the inverted second detection signals, is further coupled to the connection mode switching module 52, and generates, based on the inverted second detection signals, a third logic signal that indicates whether both of the batteries 903 are rechargeable and that is for receipt by the connection mode switching module 52. The third logic signal causes the connection mode switching module 52 to operate in the series connection mode 522 when indicating that the batteries 903 are not both rechargeable (i.e., at least one of the batteries 903 is non-rechargeable), and is dismissed as inconsequential when indicating that both of the batteries 903 are rechargeable. In this embodiment, the third logic circuit 533 includes an OR gate. The OR gate has two input terminals that are respectively coupled to the battery type detectors 41 to respectively receive the inverted second detection signals, and an output terminal that is coupled to the connection mode switching module 52 and that provides the third logic signal. When any one of the inverted second detection signals is at the logic "1" level, the third logic signal is at a logic "1" level to indicate that the batteries 903 are not both rechargeable. When both of the inverting second detection signals are at the logic "0" level, the third logic signal is at a logic "0" level to indicate that both of the batteries 903 are rechargeable.

The fourth logic circuit 534 is coupled to the first to third logic circuits 531-533 to receive the first to third logic signals, is further coupled to the connection mode switching module 52, and generates a fourth logic signal based on the first to third logic signals for receipt by the connection mode switching module 52. The fourth logic signal causes the connection mode switching module 52 to operate in the parallel connection mode 522 when all of the following conditions are met: the first logic signal indicates that both of the batteries 903 are correctly installed; the second logic signal indicates that the batteries 903 are not both non-rechargeable; and the third logic signal indicates that both of the batteries 903 are rechargeable. The fourth logic signal does not matter when otherwise.

In this embodiment, the fourth logic circuit 534 includes a first inverter, a second inverter and an AND gate. The first inverter has an input terminal that is coupled to the output terminal of the OR gate of the first logic circuit 531, and an output terminal. The second inverter has an input terminal that is coupled to the output terminal of the OR gate of the third logic circuit 533, and an output terminal. The AND gate has three input terminals that are respectively coupled to the output terminal of the OR gate of the second logic circuit 532, the output terminal of the first inverter and the output terminal of the second inverter. The AND gate further has an output terminal that is coupled to the connection mode switching module 52 and that provides the fourth logic signal. When the first detection result indicates that both of the batteries 903 are correctly installed and the second detection result indicates that both of the batteries 903 are rechargeable, the first logic signal is at the logic "0" level, the second logic signal is at the logic "1" level, the third logic signal is at the logic "0" level, and the fourth logic signal is at a logic "1" level so as to cause the connection mode switching module 52 to operate in the parallel connection mode 521. When the first detection result indicates that both of the batteries 903 are correctly installed and the second detection result indicates that only one of the batteries 903 is rechargeable, the first logic signal is at the logic "0" level, the second logic signal is at the logic "1" level, the third logic signal is at the logic "1" level so as to cause the connection mode switching module 52 to operate in the series connection mode 522, and the fourth logic signal is at a logic "0" level. When the first detection result indicates that both of the batteries 903 are correctly installed and the second detection result indicates that both of the batteries 903 are non-rechargeable, the first logic signal is at the logic "0" level, the second logic signal is at the logic "0" level, the third logic signal is at the logic "1" level so as to cause the connection mode switching module 52 to operate in the series connection mode 522, and the fourth logic signal is at the logic "0" level.

The charge control module 54 is adapted to be coupled to the charger device 902, is further coupled to the fourth logic circuit 534 to receive the fourth logic signal, controls the charger device 902 to output power to the charge and discharge switching module 51 when the fourth logic signal causes the connection mode switching module 52 to operate in the parallel connection mode 521 (i.e., the fourth logic signal is at the logic "1" level), and controls the charger device 902 to not output power to the charge and discharge switching module 51 when otherwise (i.e., the fourth logic signal is at the logic "0" level). In this embodiment, the charge control module 54 includes a buffer. The buffer has an input terminal that is coupled to the output terminal of the AND gate of the fourth logic circuit 534 to receive the fourth logic signal, and an output terminal that is adapted to be coupled to the charger device 902 and that provides an output control signal. When the fourth logic signal is at the logic "1" level, the output control signal is at a logic "1" level so as to cause the charger device 902 to output power to the charge and discharge switching module 51. When the fourth logic signal is at the logic "0" level, the output control signal is at a logic "0" level so as to cause the charger device 902 to not output power to the charge and discharge switching module 51.

Referring to FIGS, 1, 2 and 3, a battery charge and discharge protection method performed by the battery charge and discharge protection device 200 of this embodiment includes the following steps.

In step 801, the battery polarity detecting unit 3 detects, with respect to each of the batteries 903, whether the battery 903 is correctly installed or reversely installed, so as to generate the first detection result. In addition, with respect to each of the batteries 903, the battery polarity detecting unit 3 connects the battery 903 to the battery type detecting unit 4 when the first detection result indicates that the battery 903 is correctly installed.

In step 802, the battery type detecting unit 4, when being connected to any one of the batteries 903 by the battery polarity detecting unit 3, detects whether the battery 903 is rechargeable or non-rechargeable, so as to generate the second detection result.

In step 803, the charge and discharge control unit 5 controls power transfer to the load device 901 based on the first and second detection results.

In step 804, the charge and discharge control unit 5 controls the charger device 902 to output or not output power to the charge and discharge control unit 5 based on the first and second detection results.

To be specific, when the analyzing module 53 determines based on the first detection result that at least one of the batteries 903 is reversely installed, the analyzing module 53 controls the charge and discharge switching module 51 to operate in the OFF state 511, and controls, via the charge control module 54, the charger device 902 to not output power, so as to disable power transfer from the batteries 903 to the load device 901 and power transfer from the charger device 902 to the batteries 903. Therefore, both of the batteries 903 are neither supplying power to the load device 901, nor being charged by the charger device 902. When the analyzing module 53 determines based on the first detection result that both of the batteries 903 are correctly installed and determines based on the second detection result that both of the batteries 903 are rechargeable, the analyzing module 53 controls the charge and discharge switching module 51 to operate in the ON state 512, controls the connection mode switching module 52 to operate in the parallel connection mode 521, and controls, via the charge control module 54, the charger device 902 to output power, so as to connect the batteries 903 in parallel, and enable power transfer from the parallel connected batteries 903 to the load device 901 and power transfer from the charger device 902 to the parallel connected batteries 903. Therefore, both of the batteries 903 are supplying power to the load device 901, and are being charged by the charger device 902. When the analyzing module 53 determines based on the first detection result that both of the batteries 903 are correctly installed and determines based on the second detection result that at least one of the batteries 903 is non-rechargeable, the analyzing module 53 controls the charge and discharge switching module 51 to operate in the ON state 512, controls the connection mode switching module 52 to operate in the series connection mode 522, and controls, via the charge control module 54, the charger device 902 to not output power, so as to connect the batteries 903 in series, enable power transfer from the series connected batteries 903 to the load device 901, and disable power transfer from the charger device 902 to the series connected batteries 903. Therefore, both of the batteries 903 are supplying power to the load device 901, and none of the batteries 903 are being charged by the charger device 902.

In view of the above, the battery charge and discharge protection device 200 of this embodiment prevents the batteries 903 from supplying power to the load device 901 when at least one of the batteries 903 is reversely installed. In addition, when both of the batteries 903 are correctly installed, based on the types of the batteries 903, the battery charge and discharge protection device 200 of this embodiment automatically connects the batteries 903 in parallel or in series, and automatically determines whether to charge the batteries 903 or not.

It should be noted that this embodiment is described in detail from a scenario where the battery charge and discharge protection device 200 is installed with two batteries 903. However, the number of the batteries 903 is not limited to two, and can be increased. When the number of the batteries 903 is increased, the number of the battery polarity detectors 31 and the number of the battery type detectors 41 should be increased as well.

In addition, the analyzing module 53 is not limited to the aforesaid configuration. There are many other ways to implement the analyzing module 53. For example, the analyzing module 53 may be implemented using transistor circuits and/or a combination of a microprocessor and software.

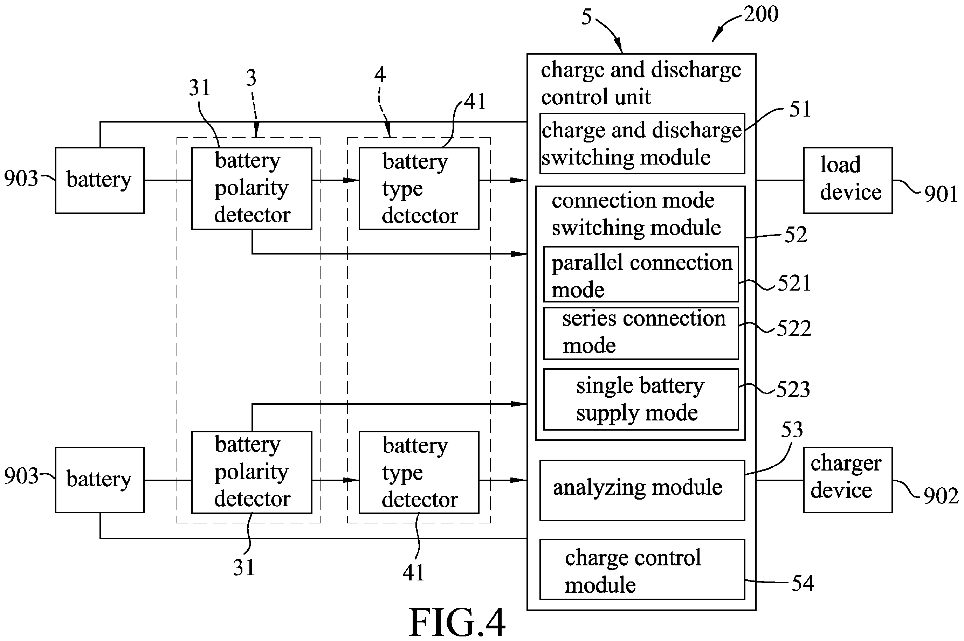

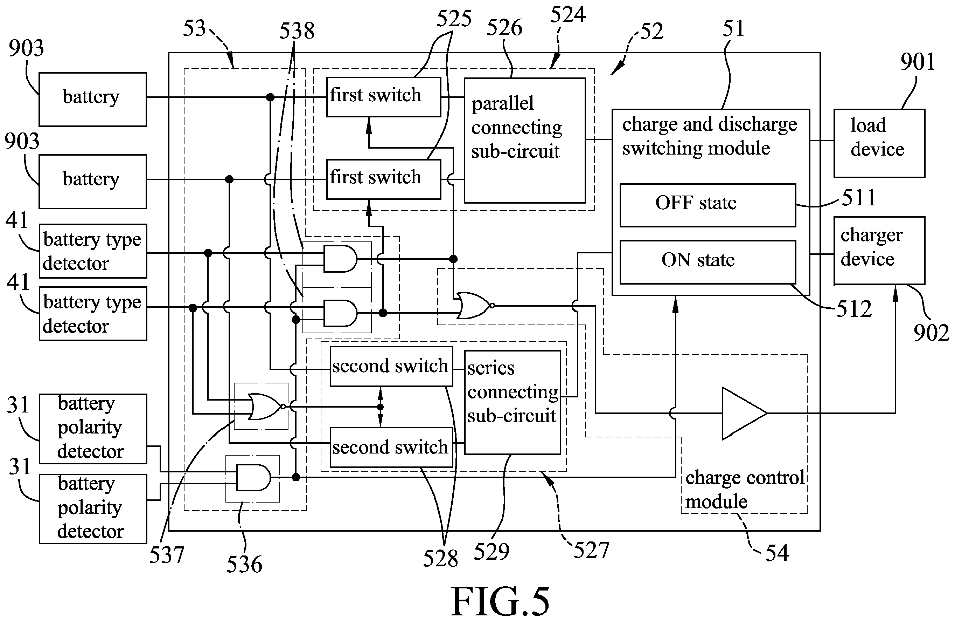

Referring to FIGS. 4 and 5, a second embodiment of the battery charge and discharge protection device 200 according to the disclosure is similar to the first embodiment, but differs from the first embodiment in what will be described below.

In the second embodiment, with respect to each of the battery polarity detectors 31, the first detection signal generated by the battery polarity detector 31 is at the logic "1" level when the battery polarity detector 31 determines that the corresponding battery 903 is correctly installed, and is at the logic "0" level when the battery polarity detector 31 determines that the corresponding battery 903 is reversely installed.

The connection modes further include a single battery supply mode 523, and the connection mode switching module 52 includes a parallel connection mode circuit 524 and a series connection mode circuit 527.

The parallel connection mode circuit 524 includes two first switches 525 that respectively correspond to the batteries 903, and a parallel connecting sub-circuit 526. Each of the first switches 525 is adapted to be coupled to the corresponding battery 903. The parallel connecting sub-circuit 526 is coupled to the first switches 525 and the charge and discharge switching module 51.

The series connection mode circuit 527 includes two second switches 528 that respectively correspond to the batteries 903, and a series connecting sub-circuit 529. Each of the second switches 528 is adapted to be coupled to the corresponding battery 903. The series connecting sub-circuit 529 is coupled to the second switches 528 and the charge and discharge switching module 51.

The analyzing module 53 includes a first logic circuit 536, a second logic circuit 537 and two third logic circuits 538.

The first logic circuit 536 is coupled to the battery polarity detectors 31 to receive the first detection signals, is further coupled to the charge and discharge switching module 51, and generates, based on the first detection signals, a first logic signal that indicates whether both of the batteries 903 are correctly installed and that is for receipt by the charge and discharge switching module 51. The first logic signal causes the charge and discharge switching module 51 to operate in the ON state 512 when indicating that both of the batteries 903 are correctly installed, and causes the charge and discharge switching module 51 to operate in the OFF state 511 when indicating that the batteries 903 are not both correctly installed (i.e., at least one of the batteries 903 is reversely installed). In this embodiment, the first logic circuit 536 includes an AND gate. The AND gate has two input terminals that are respectively coupled to the battery polarity detectors 31 to respectively receive the first detection signals, and an output terminal that is coupled to the charge and discharge switching module 51 and that provides the first logic signal. When both of the first detection signals are at the logic "1" level, the first logic signal is at a logic "1" level to indicate that both of the batteries 903 are correctly installed. When any one of the first detection signals is at the logic "0" level, the first logic signal is at a logic "0" level to indicate that the batteries 903 are not both correctly installed.

The second logic circuit 537 is coupled to the battery type detectors 41 to receive the second detection signals, is further coupled to the second switches 528, and generates, based on the second detection signals, a second logic signal that indicates whether both of the batteries 903 are non-rechargeable and that is for receipt by the second switches 528. The second logic signal causes the second switches 528 to conduct (i.e., causing the connection mode switching module 52 to operate in the series connection mode 522) when indicating that both of the batteries 903 are non-rechargeable, and causes the second switches 528 to not conduct when indicating that the batteries 903 are not both non-rechargeable (i.e., at least one of the batteries 903 is rechargeable). When both of the second switches 528 conduct, the second switches 528 respectively connect the batteries 903 to the series connecting sub-circuit 529, and the series connecting sub-circuit 529 connects the batteries 903 in series, and permits transmission of power that is received from the series connected batteries 903 to the charge and discharge switching module 51. In this embodiment, the second logic circuit 537 includes a NOR gate. The NOR gate has two input terminals that are respectively coupled to the battery type detectors 41 to respectively receive the second detection signals, and an output terminal that is coupled to the second switches 528 and that provides the second logic signal. When both of the second detection signals are at the logic "0" level, the second logic signal is at a logic "1" level to indicate that both of the batteries 903 are non-rechargeable. When any one of the second detection signals is at the logic "1" level, the second logic signal is at a logic "0" level to indicate that the batteries 903 are not both non-rechargeable.

The third logic circuits 538 respectively correspond to the batteries 903. With respect to each of the batteries 903, the corresponding third logic circuit 538 is coupled to the first logic circuit 536 and the corresponding battery type detector 41 to receive the first logic signal and the second detection signal, is further coupled to the corresponding first switch 525, and generates, based on the first logic signal and the second detection signal, a third logic signal that is for receipt by the corresponding first switch 525 and that controls switching of the corresponding first switch 525 between conduction and non-conduction. In this embodiment, the corresponding third logic circuit 538 includes an AND gate. The AND gate has two input terminals that are respectively coupled to the first logic circuit 536 and the corresponding battery type detector 41 to respectively receive the first logic signal and the second detection signal, and an output terminal that is coupled to the corresponding first switch 525 and that provides the third logic signal. When both of the first logic signal and the second detection signal are at the logic "1" level, the third logic signal is at a logic "1" level so as to cause the corresponding first switch 525 to conduct. When any one of the first logic signal and the second detection signal is at the logic "0" level, the third logic signal is at a logic "0" level so as to cause the corresponding first switch 525 to not conduct.

Therefore, when the first logic signal indicates that both of the batteries 903 are correctly installed and the second detection signals collectively indicate that both of the batteries 903 are rechargeable, the third logic signals that are respectively generated by the third logic circuits 538 respectively cause the first switches 525 to conduct (i.e., collectively causing the connection mode switching module 52 to operate in the parallel connection mode 521). When the first logic signal indicates that both of the batteries 903 are correctly installed and the second detection signals collectively indicate that only one of the batteries 903 is rechargeable, the third logic signals will cause only one of the first switches 525 to conduct (i.e., collectively causing the connection mode switching module 52 to operate in the single battery supply mode 523). Otherwise, the third logic signals respectively cause the first switches 525 to not conduct.

When both of the first switches 525 conduct, the first switches 525 respectively connect the batteries 903 to the parallel connecting sub-circuit 526, and the parallel connecting sub-circuit 526 connects the batteries 903 in parallel, permits transmission of power that is received from the parallel connected batteries 903 to the charge and discharge switching module 51, and permits transmission of power that is received from the charge and discharge switching module 51 to the parallel connected batteries 903. When only one of the first switches 525 conducts, the conducting first switch 525 connects the corresponding battery 903 to the parallel connecting sub-circuit 526, the non-conducting first switch 525 disconnects the corresponding battery 903 from the parallel connecting sub-circuit 526, and the parallel connecting sub-circuit 526 permits transmission of power, that is, permitting power received from the battery 903 connected to the parallel connecting sub-circuit 526 to transmit to the charge and discharge switching module 51 and power received from the charge and discharge switching module 51 to transmit to the battery 903 that is connected to the parallel connecting sub-circuit 526.

The charge control module 54 is coupled to the third logic circuits 538 to receive the third logic signals, controls the charger device 902 to output power to the charge and discharge switching module 51 when the third logic signals collectively cause the connection mode switching module 52 to operate in any one of the parallel connection mode 521 and the single battery supply mode 523, and controls the charger device 902 to not output power to the charge and discharge switching module 51 when otherwise. In this embodiment, the charge control module 54 includes a NOR gate and a buffer. The NOR gate has two input terminals that are respectively coupled to the output terminals of the AND gates of the third logic circuits 538 to respectively receive the third logic signals, and an output terminal. The buffer has an input terminal that is coupled to the output terminal of the NOR gate, and an output terminal that is adapted to be coupled to the charger device 902 and that provides an output control signal. When any one of the third logic signals is at the logic "1" level, the output control signal is at a logic "0" level so as to cause the charger device 902 to output power to the charge and discharge switching module 51. When both of the third logic signals are at the logic "0" level, the output control signal is at a logic "1" level so as to cause the charger device 902 to not output power to the charge and discharge switching module 51.

Therefore, when the analyzing module 53 determines based on the first detection result that at least one of the batteries 903 is reversely installed, the analyzing module 53 controls the charge and discharge switching module 51 to operate in the OFF state 511, and controls, via the charge control module 54, the charger device 902 to not output power, so as to disable power transfer from the batteries 903 to the load device 901 and power transfer from the charger device 902 to the batteries 903. Therefore, both of the batteries 903 are neither supplying power to the load device 901, nor being charged by the charger device 902. When the analyzing module 53 determines based on the first detection result that both of the batteries 903 are correctly installed and determines based on the second detection result that both of the batteries 903 are rechargeable, the analyzing module 53 controls the charge and discharge switching module 51 to operate in the ON state 512, controls the connection mode switching module 52 to operate in the parallel connection mode 521, and controls, via the charge control module 54, the charger device 902 to output power, so as to connect the batteries 903 in parallel, and enable power transfer from the parallel connected batteries 903 to the load device 901 and power transfer from the charger device 902 to the parallel connected batteries 903. Therefore, both of the batteries 903 are supplying power to the load device 901, and are being charged by the charger device 902. When the analyzing module 53 determines based on the first detection result that both of the batteries 903 are correctly installed and determines based on the second detection result that only one of the batteries 903 is rechargeable, the analyzing module 53 controls the charge and discharge switching module 51 to operate in the ON state 512, controls the connection mode switching module 52 to operate in the single battery supply mode 523, and controls, via the charge control module 54, the charger device 902 to output power, so as to enable power transfer from the battery 903 that is determined to be rechargeable to the load device 901 and power transfer from the charger device 902 to the battery 903 that is determined to be rechargeable. Therefore, only the battery 903 that is determined to be rechargeable is supplying power to the load device 901, and is being charged by the charger device 902. When the analyzing module 53 determines based on the first detection result that both of the batteries 903 are correctly installed and determines based on the second detection result that both of the batteries 903 are non-rechargeable, the analyzing module 53 controls the charge and discharge switching module 51 to operate in the ON state 512, controls the connection mode switching module 52 to operate in the series connection mode 522, and controls, via the charge control module 54, the charger device 902 to not output power, so as to connect the batteries 903 in series, enable power transfer from the series connected batteries 903 to the load device 901, and disable power transfer from the charger device 902 to the series connected batteries 903. Therefore, both of the batteries 903 are supplying power to the load device 901, and none of the batteries 903 are being charged by the charger device 902.

In view of the above, since the battery charge and discharge protection device 200 of this embodiment prevents the batteries 903 from supplying power to the load device 901 when at least one of the batteries 903 is reversely installed, the load device 901 would not be damaged by the reversely installed battery(ies) 903, if any. In addition, in a scenario where both of the batteries 903 are correctly installed, the battery charge and discharge protection device 200 of this embodiment performs one of the following actions based on the types of the batteries 903: when both of the batteries 903 are rechargeable, connecting the batteries 903 in parallel, and permitting the parallel connected batteries 903 to supply power to the load device 903; when only one of the batteries 903 is rechargeable, permitting the rechargeable battery 903 to supply power to the load device 903; and when both of the batteries 903 are non-rechargeable, connecting the batteries 903 in series, and permitting the series connected batteries 903 to supply power to the load device 903, thereby optimizing power transfer from the batteries 903 to the load device 903. Moreover, in the aforesaid scenario, when any one of the batteries 903 is rechargeable, the battery charge and discharge protection device 200 of this embodiment controls the charger device 902 to output power, and uses the power outputted by the charger device 902 to charge the rechargeable battery(ies) 903.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A battery charge and discharge protection device (200) adapted to be coupled to a load device (901) and a charger device (902), and adapted to be installed with two batteries (903), said battery charge and discharge protection device (200) being **characterized by** comprising:
a battery polarity detecting unit (3) adapted to be coupled to the batteries (903), and configured to detect, with respect to each of the batteries (903), whether the battery (903) is correctly installed or reversely installed, so as to generate a first detection result;
a battery type detecting unit (4) disposed and configured to detect, with respect to each of the batteries (903), whether the battery (903) is rechargeable or non-rechargeable, so as to generate a second detection result; and
a charge and discharge control unit (5) coupled to said battery polarity detecting unit (3) and said battery type detecting unit (4) being adapted to receive the first and second detection results, and adapted to be further coupled to the load device (901), the charger device (902) and the batteries (903);
when said charge and discharge control unit (5) determines based on the first detection result that at least one of the batteries (903) is reversely installed, said charge and discharge control unit (5) disabling power transfer from the batteries (903) to the load device (901), and disabling power transfer from the charger device (902) to the batteries (903);
when said charge and discharge control unit (5) determines based on the first detection result that both of the batteries (903) are correctly installed and determines based on the second detection result that both of the batteries (903) are rechargeable, said charge and discharge control unit (5) connecting the batteries (903) in parallel, enabling power transfer from the batteries (903) that have been connected in parallel to the load device (901), and enabling power transfer from the charger device (902) to the batteries (903) that have been connected in parallel;
when said charge and discharge control unit (5) determines based on the first detection result that both of the batteries (903) are correctly installed and determines based on the second detection result that only one of the batteries (903) is rechargeable, said charge and discharge control unit (5) enabling power transfer from the battery (903) that is determined to be rechargeable to the load device (901), and enabling power transfer from the charger device (902) to the battery (903) that is determined to be rechargeable.

2. The battery charge and discharge protection device (200) of claim 1, **characterized in that** said charge and discharge control unit (5) includes:
a charge and discharge switching module (51) adapted to be coupled to the load device (901) and the charger device (902), and operable in a plurality of states that include an OFF state (511) and an ON state (512);
a connection mode switching module (52) adapted to be coupled to the batteries (903), further coupled to said charge and discharge switching module (51), and operable in a plurality of connection modes that include a parallel connection mode (521) and a single battery supply mode (523);
said charge and discharge switching module (51), when operating in the OFF state (511), preventing transmission of power that is received from said connection mode switching module (52) to the load device (901);
said charge and discharge switching module (51), when operating in the ON state (512), permitting transmission of power that is received from said connection mode switching module (52) to the load device (901) and transmission of power that is received from the charger device (902) to said connection mode switching module (52);
when said connection mode switching module (52) operates in the parallel connection mode (521), said connection mode switching module (52) connecting the batteries (903) in parallel, and permitting transmission of power that is received from the batteries (903) that have been connected in parallel to said charge and discharge switching module (51) and transmission of power that is received from said charge and discharge switching module (51) to the batteries (903) that have been connected in parallel;
when said connection mode switching module (52) operates in the single battery supply mode (523), said connection mode switching module (52) permitting transmission of power that is received from the battery (903) determined to be rechargeable to said charge and discharge switching module (51) and transmission of power that is received from said charge and discharge switching module (51) to the battery (903) that is determined to be rechargeable; and
an analyzing module (53) coupled to said battery polarity detecting unit (3) and said battery type detecting unit (4) being adapted
to receive the first and second
detection results, and further coupled to said charge and discharge switching module (51) and said connection mode switching module (52);
said analyzing module (53) controlling, based on analysis of the first and second detection results, switching of said charge and discharge switching module (51) between the OFF state (511) and the ON state (512) and switching of said connection mode switching module (52) between the parallel connection mode (521) and the single battery supply mode (523).

3. The battery charge and discharge protection device (200) of claim 2, **characterized in that**:
the connection modes further includes a series connection mode (522);
when said connection mode switching module (52) operates in the series connection mode (522), said connection mode switching module (52) connects the batteries (903) in series, and permits transmission of power that is received from the batteries (903) that have been connected in series to said charge and discharge switching module (51);
said analyzing module (53), when determining based on the first detection result that both of the batteries (903) are correctly installed and determining based on the second detection result that both of the batteries (903) are non-rechargeable, controls said connection mode switching module (52) to operate in the series connection mode (522);
said charge and discharge control unit (5) further includes a charge control module (54) that is adapted to be coupled to the charger device (902) and that is further coupled to said analyzing module (53);
when said analyzing module (53) controls said connection mode switching module (52) to operate in any one of the parallel connection mode (521) and the single battery supply mode (523), said charge control module (54) controls the charger device (902) to output power to said charge and discharge switching module (51).

4. The battery charge and discharge protection device (200) of claim 3, **characterized in that**:
the second detection result includes two second detection signals which respectively correspond to the batteries (903), and each of which indicates whether the battery (903) that corresponds to the second detection signal is rechargeable or non-rechargeable; and
said analyzing module (53) includes
a first logic circuit (536) coupled to said battery polarity detecting unit (3) to receive the first detection result, further coupled to said charge and discharge switching module (51), and generating, based on the first detection result, a first logic signal that indicates whether both of the batteries (903) are correctly installed and that is for receipt by said charge and discharge switching module (51),
the first logic signal, when indicating that both of the batteries (903) are correctly installed, causing said charge and discharge switching module (51) to operate in the ON state (512),
a second logic circuit (537) coupled to said battery type detecting unit (4) to receive the second detection result, further coupled to said connection mode switching module (52), and generating, based on the second detection result, a second logic signal that indicates whether both of the batteries (903) are non-rechargeable and that is for receipt by said connection mode switching module (52),
the second logic signal, when indicating that both of the batteries (903) are non-rechargeable, causing said connection mode switching module (52) to operate in the series connection mode (522), and
two third logic circuits (538) respectively corresponding to the batteries (903),
with respect to each of the batteries (903), said third logic circuit (538) that corresponds to the battery (903) being coupled to said first logic circuit (536) and said battery type detecting unit (4) to receive the first logic signal and the second detection signal that corresponds to the battery (903), being further coupled to said connection mode switching module (52), and generating a third logic signal for receipt by said connection mode switching module (52) based on the first logic signal and the second detection signal that corresponds to the battery (903),
when the first logic signal indicates that both of the batteries (903) are correctly installed, and when the second detection signals collectively indicate that both of the batteries (903) are rechargeable, the third logic signals that are respectively generated by said third logic circuits (538) collectively causing said connection mode switching module (52) to operate in the parallel connection mode (521),
when the first logic signal indicates that both of the batteries (903) are correctly installed, and when the second detection signals collectively indicate that only one of the batteries (903) is rechargeable, the third logic signals that are respectively generated by said third logic circuits (538) collectively causing said connection mode switching module (52) to operate in the single battery supply mode (523).

5. The battery charge and discharge protection device (200) of claim 4, **characterized in that**:
said connection mode switching module (52) includes a series connection mode circuit (527) and a parallel connection mode circuit (524);
each of said series connection mode circuit (527) and said parallel connection mode circuit (524) is adapted to be coupled to the batteries (903), and is further coupled to said charge and discharge switching module (51);
when said connection mode switching module (52) operates in the series connection mode (522), said series connection mode circuit (527) connects the batteries (903) in series, and permits transmission of power that is received from the batteries (903) that have been connected in series to said charge and discharge switching module (51);
said parallel connection mode circuit (524) includes two first switches (525) that are adapted to be respectively coupled to the batteries (903), and a parallel connecting sub-circuit (526) that is coupled to said first switches (525) and said charge and discharge switching module (51);
each of said first switch (525) is further coupled to said third logic circuit (538) that corresponds to the battery (903) coupled to said first switch (525) to receive the third logic signal, and conducts to connect the battery (903) that is coupled to said first switch (525) to said parallel connecting sub-circuit (526) when the third logic signal indicates that both of the batteries (903) are correctly installed and that the battery (903) coupled to said first switch (525) is rechargeable;
when both of said first switches (525) conduct, said parallel connecting sub-circuit (526) connects the batteries (903) in parallel, and permits transmission of power that is received from the batteries (903) that have been connected in parallel to said charge and discharge switching module (51) and transmission of power that is received from said charge and discharge switching module (51) to the batteries (903) that have been connected in parallel;
when only one of said first switches (525) conducts, said parallel connecting sub-circuit (526) permits transmission of power that is received from the battery (903) connected to said parallel connecting sub-circuit (526) to said charge and discharge switching module (51) and transmission of power that is received from said charge and discharge switching module (51) to the battery (903) that is connected to said parallel connecting sub-circuit (526).

6. The battery charge and discharge protection device (200) of claim 5, **characterized in that**:
said series connection mode circuit (527) includes two second switches (528) that are adapted to be respectively coupled to the batteries (903), and a series connecting sub-circuit (529) that is coupled to said second switches (528) and said charge and discharge switching module (51);
each of said second switches (528) is further coupled to said second logic circuit (537) to receive the second logic signal, and conducts to connect the battery (903) that is coupled to said second switch (528) to said series connecting sub-circuit (529) when the second logic signal indicates that both of the batteries (903) are non-rechargeable;
when both of said second switches (528) conduct, said series connecting sub-circuit (529) connects the batteries (903) in series, and permits transmission of power that is received from the batteries (903) that have been connected in series to said charge and discharge switching module (51).

7. The battery charge and discharge protection device (200) of any of claims 4 to 6, **characterized in that** said charge control module (54) is coupled to said third logic circuits (538) to receive the third logic signals, and controls the charger device (902) to output power to said charge and discharge switching module (51) when the third logic signals collectively cause said connection mode switching module (52) to operate in any one of the parallel connection mode (521) and the single battery supply mode (523).

## Patentansprüche

1. Batterielade- und -entladeschutzvorrichtung (200), die geeignet ist, mit einer Lastvorrichtung (901) und einer Ladevorrichtung (902) gekoppelt zu werden, und in die zwei Batterien (903) eingesetzt werden können, wobei die Batterielade- und -entladeschutzvorrichtung (200) **dadurch gekennzeichnet ist, dass** sie umfasst:
eine Batteriepolaritätserkennungseinheit (3), die geeignet ist, mit den Batterien (903) gekoppelt zu werden, und konfiguriert ist, um in Bezug auf jede der Batterien (903) zu erkennen, ob die Batterie (903) korrekt oder verkehrt herum eingesetzt ist, um ein erstes Erkennungsergebnis zu erzeugen;
eine Batterietyperkennungseinheit (4), die angeordnet und konfiguriert ist, um in Bezug auf jede der Batterien (903) zu erkennen, ob die Batterie (903) wiederaufladbar oder nicht wiederaufladbar ist, um ein zweites Erkennungsergebnis zu erzeugen; und
eine Lade- und Entladesteuereinheit (5), die mit der Batteriepolaritätserkennungseinheit (3) und der Batterietyperkennungseinheit (4), die geeignet ist, das erste und zweite Erkennungsergebnis zu empfangen, gekoppelt ist und geeignet ist, ferner mit der Lastvorrichtung (901), der Ladevorrichtung (902) und den Batterien (903) gekoppelt zu werden;
wobei, wenn die Lade- und Entladesteuereinheit (5) basierend auf dem ersten Erkennungsergebnis bestimmt, dass mindestens eine der Batterien (903) verkehrt herum eingesetzt ist, die Lade- und Entladesteuereinheit (5) die Energieübertragung von den Batterien (903) an die Lastvorrichtung (901) deaktiviert und die Energieübertragung von der Ladevorrichtung (902) an die Batterien (903) deaktiviert;
wobei, wenn die Lade- und Entladesteuereinheit (5) basierend auf dem ersten Erkennungsergebnis bestimmt, dass beide Batterien (903) korrekt eingesetzt sind, und basierend auf dem zweiten Erkennungsergebnis bestimmt, dass beide Batterien (903) wiederaufladbar sind, die Lade- und Entladesteuereinheit (5) die Batterien (903) parallel schaltet, eine Energieübertragung von den Batterien (903), die parallel geschaltet wurden, an die Lastvorrichtung (901) aktiviert und eine Energieübertragung von der Ladevorrichtung (902) an die Batterien (903), die parallel geschaltet wurden, aktiviert;
wobei, wenn die Lade- und Entladesteuereinheit (5) basierend auf dem ersten Erkennungsergebnis bestimmt, dass beide Batterien (903) korrekt eingesetzt sind, und basierend auf dem zweiten Erkennungsergebnis bestimmt, dass nur eine der Batterien (903) wiederaufladbar ist, die Lade- und Entladesteuereinheit (5) eine Energieübertragung von der Batterie (903), die als wiederaufladbar bestimmt wird, an die Lastvorrichtung (901) aktiviert und eine Energieübertragung von der Ladevorrichtung (902) an die Batterie (903), die als wiederaufladbar bestimmt wird, aktiviert.

2. Batterielade- und -entladeschutzvorrichtung (200) nach Anspruch 1, **dadurch gekennzeichnet, dass** die Lade- und Entladesteuereinheit (5) einschließt:
ein Lade- und Entladeumschaltmodul (51), das geeignet ist, mit der Lastvorrichtung (901) und der Ladevorrichtung (902) gekoppelt zu werden, und das in einer Vielzahl von Zuständen betreibbar ist, die einen AUS-Zustand (511) und einen EIN-Zustand (512) einschließen;
ein Verbindungsmodusumschaltmodul (52), das geeignet ist, mit den Batterien (903) gekoppelt zu werden, ferner mit dem Lade- und Entladeumschaltmodul (51) gekoppelt ist und in einer Vielzahl von Verbindungsmodi betreibbar ist, die einen Parallelverbindungsmodus (521) und einen Einzelbatterieversorgungsmodus (523) einschließen;
wobei das Lade- und Entladeumschaltmodul (51), wenn es im AUS-Zustand (511) arbeitet, die Übertragung von Energie, die von dem Verbindungsmodusumschaltmodul (52) empfangen wird, an die Lastvorrichtung (901) verhindert;
wobei das Lade- und Entladeumschaltmodul (51), wenn es im EIN-Zustand (512) arbeitet, die Übertragung von Energie, die von dem Verbindungsmodusumschaltmodul (52) empfangen wird, an die Lastvorrichtung (901) und die Übertragung von Energie, die von der Ladevorrichtung (902) empfangen wird, an das Verbindungsmodusumschaltmodul (52) ermöglicht;
wobei, wenn das Verbindungsmodusumschaltmodul (52) in dem Parallelverbindungsmodus (521) arbeitet, das Verbindungsmodusumschaltmodul (52) die Batterien (903) parallel schaltet und die Übertragung von Energie, die von den Batterien (903) empfangen wird, die parallel geschaltet wurden, an das Lade- und Entladeumschaltmodul (51) und die Übertragung von Energie, die von dem Lade- und Entladeumschaltmodul (51) empfangen wird, an die Batterien (903), die parallel geschaltet wurden, ermöglicht;
wobei, wenn das Verbindungsmodusumschaltmodul (52) in dem Einzelbatterieversorgungsmodus (523) arbeitet, das Verbindungsmodusumschaltmodul (52) die Übertragung von Energie, die von der als wiederaufladbar bestimmten Batterie (903) empfangen wird, an das Lade- und Entladeumschaltmodul (51) und die Übertragung von Energie, die von dem Lade- und Entladeumschaltmodul (51) empfangen wird, an die als wiederaufladbar bestimmte Batterie (903) ermöglicht; und
ein Analysemodul (53), das mit der Batteriepolaritätserkennungseinheit (3) und der Batterietyperkennungseinheit (4) gekoppelt ist und geeignet ist, das erste und das zweite Erkennungsergebnis zu empfangen, und das ferner mit dem Lade- und Entladeschaltmodul (51) und dem Verbindungsmodusumschaltmodul (52) gekoppelt ist;
wobei das Analysemodul (53) basierend auf der Analyse des ersten und des zweiten Erkennungsergebnisses das Umschalten des Lade- und Entladeumschaltmoduls (51) zwischen dem AUS-Zustand (511) und dem EIN-Zustand (512) und das Umschalten des Verbindungsmodusumschaltmoduls (52) zwischen dem Parallelverbindungsmodus (521) und dem Einzelbatterieversorgungsmodus (523) steuert.

3. Batterielade- und -entladeschutzvorrichtung (200) nach Anspruch 2, **dadurch gekennzeichnet, dass:**
die Verbindungsmodi ferner einen Reihenverbindungsmodus (522) einschließen;
wobei, wenn das Verbindungsmodusumschaltmodul (52) in dem Reihenverbindungsmodus (522) arbeitet, das Verbindungsmodusumschaltmodul (52) die Batterien (903) in Reihe schaltet und die Übertragung von Energie, die von den in Reihe geschalteten Batterien (903) empfangen wird, an das Lade- und Entladeumschaltmodul (51) ermöglicht;
wobei das Analysemodul (53), wenn basierend auf dem ersten Erkennungsergebnis bestimmt wird, dass beide Batterien (903) korrekt eingesetzt sind, und wenn basierend auf dem zweiten Erkennungsergebnis bestimmt wird, dass beide Batterien (903) nicht wiederaufladbar sind, das Verbindungsmodusumschaltmodul (52) so steuert, dass es in dem Reihenverbindungsmodus (522) arbeitet;
wobei die Lade- und Entladesteuereinheit (5) ferner ein Ladesteuermodul (54) einschließt, das geeignet ist, mit der Ladevorrichtung (902) gekoppelt zu werden, und das ferner mit dem Analysemodul (53) gekoppelt ist;
wobei, wenn das Analysemodul (53) das Verbindungsmodusumschaltmodul (52) so steuert, dass es in einem von dem Parallelverbindungsmodus (521) und dem Einzelbatterieversorgungsmodus (523) arbeitet, das Ladesteuermodul (54) die Ladevorrichtung (902) steuert, um Energie an das Lade- und Entladeumschaltmodul (51) auszugeben.

4. Batterielade- und -entladeschutzvorrichtung (200) nach Anspruch 3, **dadurch gekennzeichnet, dass:**
das zweite Erkennungsergebnis zwei zweite Erkennungssignale einschließt, die jeweils den Batterien (903) entsprechen und von denen jedes angibt, ob die Batterie (903), die dem zweiten Erkennungssignal entspricht, wiederaufladbar oder nicht wiederaufladbar ist; und
das Analysemodul (53) einschließt
eine erste Logikschaltung (536), die mit der Batteriepolaritätserkennungseinheit (3) gekoppelt ist, um das erste Erkennungsergebnis zu empfangen, ferner mit dem Lade- und Entladeumschaltmodul (51) gekoppelt ist und basierend auf dem ersten Erkennungsergebnis ein erstes Logiksignal erzeugt, das angibt, ob beide Batterien (903) korrekt eingesetzt sind, und das zum Empfang durch das Lade- und Entladeumschaltmodul (51) vorgesehen ist,
wobei das erste Logiksignal, wenn es angibt, dass beide Batterien (903) korrekt eingesetzt sind, das Lade- und Entladeumschaltmodul (51) veranlasst, im EIN-Zustand (512) zu arbeiten,
eine zweite Logikschaltung (537), die mit der Batterietyperkennungseinheit (4) gekoppelt ist, um das zweite Erkennungsergebnis zu empfangen, ferner mit dem Verbindungsmodusumschaltmodul (52) gekoppelt ist und basierend auf dem zweiten Erkennungsergebnis ein zweites Logiksignal erzeugt, das angibt, ob beide Batterien (903) nicht wiederaufladbar sind, und das zum Empfang durch das Verbindungsmodusumschaltmodul (52) vorgesehen ist,
wobei das zweite Logiksignal, wenn es angibt, dass beide Batterien (903) nicht wiederaufladbar sind, das Verbindungsmodusumschaltmodul (52) veranlasst, in dem Reihenverbindungsmodus (522) zu arbeiten, und
zwei dritte Logikschaltungen (538), die jeweils den Batterien (903) entsprechen,
wobei in Bezug auf jede der Batterien (903) die dritte Logikschaltung (538), die der Batterie (903) entspricht, die mit der ersten Logikschaltung (536) und der Batterietyperkennungseinheit (4) gekoppelt ist, um das erste Logiksignal und das zweite Erkennungssignal, das der Batterie (903) entspricht, zu empfangen, ferner mit dem Verbindungsmodusumschaltmodul (52) gekoppelt ist und ein drittes Logiksignal zum Empfang durch das Verbindungsmodusumschaltmodul (52) basierend auf dem ersten Logiksignal und dem zweiten Erkennungssignal das der Batterie (903) entspricht, erzeugt,
wobei, wenn das erste Logiksignal angibt, dass beide Batterien (903) korrekt eingesetzt sind, und wenn die zweiten Erkennungssignale gemeinsam angeben, dass beide Batterien (903) wiederaufladbar sind, die dritten Logiksignale, die jeweils von den dritten Logikschaltungen (538) erzeugt werden, gemeinsam das Verbindungsmodusumschaltmodul (52) veranlassen, in dem Parallelverbindungsmodus (521) zu arbeiten,
wobei, wenn das erste Logiksignal angibt, dass beide Batterien (903) korrekt eingesetzt sind, und wenn die zweiten Erkennungssignale gemeinsam angeben, dass nur eine der Batterien (903) wiederaufladbar ist, die dritten Logiksignale, die jeweils von den dritten Logikschaltungen (538) erzeugt werden, gemeinsam das Verbindungsmodusumschaltmodul (52) veranlassen, in dem Einzelbatterieversorgungsmodus (523) zu arbeiten.

5. Batterielade- und -entladeschutzvorrichtung (200) nach Anspruch 4, **dadurch gekennzeichnet, dass:**
das Verbindungsmodusumschaltmodul (52) eine Reihenverbindungsmodusschaltung (527) und eine Parallelverbindungsmodusschaltung (524) einschließt;
jede der Reihenverbindungsmodusschaltung (527) und der Parallelverbindungsmodusschaltung (524) geeignet ist, mit den Batterien (903) gekoppelt zu werden, und ferner mit dem Lade- und Entladeumschaltmodul (51) gekoppelt ist;
wobei, wenn das Verbindungsmodusumschaltmodul (52) in dem Reihenverbindungsmodus (522) arbeitet, die Reihenverbindungsmodusschaltung (527) die Batterien (903) in Reihe schaltet und die Übertragung von Energie, die von den in Reihe geschalteten Batterien (903) empfangen wird, an das Lade- und Entladeumschaltmodul (51) ermöglicht;
die Parallelverbindungsmodusschaltung (524) zwei erste Schalter (525), die geeignet sind, jeweils mit den Batterien (903) gekoppelt zu werden, und eine Parallelverbindungsteilschaltung (526), die mit den ersten Schaltern (525) und dem Lade- und Entladeumschaltmodul (51) gekoppelt ist, einschließt;
jeder der ersten Schalter (525) ferner mit der dritten Logikschaltung (538) gekoppelt ist, die der mit dem ersten Schalter (525) gekoppelten Batterie (903) entspricht, um das dritte Logiksignal zu empfangen, und leitet, um die mit dem ersten Schalter (525) gekoppelte Batterie (903) mit der Parallelverbindungsteilschaltung (526) zu verbinden, wenn das dritte Logiksignal angibt, dass beide Batterien (903) korrekt eingesetzt sind und dass die mit dem ersten Schalter (525) gekoppelte Batterie (903) wiederaufladbar ist;
wobei, wenn beide ersten Schalter (525) leiten, die Parallelverbindungsteilschaltung (526) die Batterien (903) parallel schaltet und die Übertragung von Energie, die von den Batterien (903) empfangen wird, die parallel geschaltet wurden, an das Lade- und Entladeumschaltmodul (51) und die Übertragung von Energie, die von dem Lade- und Entladeumschaltmodul (51) empfangen wird, an die Batterien (903), die parallel geschaltet wurden, ermöglicht;
wobei, wenn nur einer der ersten Schalter (525) leitet, die Parallelverbindungsteilschaltung (526) die Übertragung von Energie, die von der mit der Parallelverbindungsteilschaltung (526) verbundenen Batterie (903) empfangen wird, an das Lade- und Entladeumschaltmodul (51) und die Übertragung von Energie, die von dem Lade- und Entladeumschaltmodul (51) empfangen wird, an die mit der Parallelverbindungsteilschaltung (526) verbundene Batterie (903) ermöglicht.

6. Batterielade- und -entladeschutzvorrichtung (200) nach Anspruch 5, **dadurch gekennzeichnet, dass:**
die Reihenverbindungsmodusschaltung (527) zwei zweite Schalter (528), die geeignet sind, jeweils mit den Batterien (903) gekoppelt zu werden, und eine Reihenverbindungsteilschaltung (529), die mit den zweiten Schaltern (528) und dem Lade- und Entladeumschaltmodul (51) gekoppelt ist, einschließt;
jeder der zweiten Schalter (528) ferner mit der zweiten Logikschaltung (537) gekoppelt ist, um das zweite Logiksignal zu empfangen, und leitet, um die mit dem zweiten Schalter (528) gekoppelte Batterie (903) mit der Reihenverbindungsteilschaltung (529) zu verbinden, wenn das zweite Logiksignal angibt, dass beide Batterien (903) nicht wiederaufladbar sind;
wobei, wenn beide der zweiten Schalter (528) leiten, die Reihenverbindungsteilschaltung (529) die Batterien (903) in Reihe schaltet und die Übertragung von Energie, die von den in Reihe geschalteten Batterien (903) empfangen wird, an das Lade- und Entladeumschaltmodul (51) ermöglicht.

7. Batterielade- und -entladeschutzvorrichtung (200) nach einem der Ansprüche 4 bis 6, **dadurch gekennzeichnet, dass** das Ladesteuermodul (54) mit den dritten Logikschaltungen (538) gekoppelt ist, um die dritten Logiksignale zu empfangen, und die Ladevorrichtung (902) steuert, um Energie an das Lade- und Entladeumschaltmodul (51) auszugeben, wenn die dritten Logiksignale gemeinsam das Verbindungsmodusumschaltmodul (52) veranlassen, in einem von dem Parallelverbindungsmodus (521) und dem Einzelbatterieversorgungsmodus (523) zu arbeiten.

## Revendications

1. Dispositif de protection contre la charge et la décharge de la batterie (200) conçu pour être couplé à un dispositif de charge (901) et à un dispositif chargeur (902), et conçu pour être installé avec deux batteries (903), ledit dispositif de protection contre la charge et la décharge de la batterie (200) étant **caractérisé en ce qu'il** comprend :
une unité de détection de la polarité de la batterie (3) conçue pour être couplée aux batteries (903), et configurée pour détecter, par rapport à chacune des batteries (903), si la batterie (903) est correctement installée ou installée à l'envers, de manière à générer un premier résultat de détection ;
une unité de détection du type de batterie (4) disposée et configurée pour détecter, par rapport à chacune des batteries (903), si la batterie (903) est rechargeable ou non rechargeable, de manière à générer un second résultat de détection ; et
une unité de commande de charge et de décharge (5) couplée à ladite unité de détection de la polarité de la batterie (3) et ladite unité de détection du type de batterie (4) étant conçue pour recevoir le premier et le second résultat de détection, et conçue pour être en outre couplée au dispositif de charge (901), au dispositif chargeur (902) et aux batteries (903) ;
lorsque ladite unité de commande de charge et de décharge (5) détermine, sur la base du premier résultat de détection, qu'au moins l'une des batteries (903) est installée à l'envers, ladite unité de commande de charge et de décharge (5) désactivant le transfert d'énergie des batteries (903) au dispositif chargeur (901), et désactivant le transfert d'énergie du dispositif chargeur (902) aux batteries (903) ;
lorsque ladite unité de commande de charge et de décharge (5) détermine, sur la base du premier résultat de détection, que les deux batteries (903) sont correctement installées et détermine, sur la base du second résultat de détection, que les deux batteries (903) sont rechargeables, ladite unité de commande de charge et de décharge (5) connectant les batteries (903) en parallèle, activant le transfert d'énergie des batteries (903) qui ont été connectées en parallèle au dispositif de charge (901), et activant le transfert d'énergie du dispositif chargeur (902) aux batteries (903) qui ont été connectées en parallèle ;
lorsque ladite unité de commande de charge et de décharge (5) détermine, sur la base du premier résultat de détection, que les deux batteries (903) sont correctement installées et détermine, sur la base du second résultat de détection, qu'une seule des batteries (903) est rechargeable, ladite unité de commande de charge et de décharge (5) activant le transfert d'énergie de la batterie (903) qui est déterminée comme étant rechargeable au dispositif de charge (901), et activant le transfert d'énergie du dispositif chargeur (902) à la batterie (903) qui est déterminée comme étant rechargeable.

2. Dispositif de protection contre la charge et la décharge de la batterie (200) selon la revendication 1, **caractérisé en ce que** ladite unité de commande de charge et de décharge (5) comporte :
un module de commutation de charge et de décharge (51) conçu pour être couplé au dispositif de charge (901) et au dispositif chargeur (902), et pouvant fonctionner dans une pluralité d'états, y compris un état DÉSACTIVÉ (511) et un état ACTIVÉ (512) ;
un module de commutation de mode de connexion (52) conçu pour être couplé aux batteries (903), couplé en outre audit module de commutation de charge et de décharge (51), et pouvant fonctionner dans une pluralité de modes de connexion, y compris un mode de connexion en parallèle (521) et un mode d'alimentation d'une seule batterie (523) ;
ledit module de commutation de charge et de décharge (51), lorsqu'il fonctionne à l'état DÉSACTIVÉ (511), empêchant la transmission de l'énergie qui est reçue dudit module de commutation de mode de connexion (52) au dispositif de charge (901) ;
ledit module de commutation de charge et de décharge (51), lorsqu'il fonctionne à l'état ACTIVÉ (512), permettant la transmission de l'énergie qui est reçue dudit module de commutation de mode de connexion (52) au dispositif de charge (901) et la transmission de l'énergie qui est reçue du dispositif chargeur (902) audit module de commutation de mode de connexion (52) ;
lorsque ledit module de commutation de mode de connexion (52) fonctionne en mode de connexion parallèle (521), ledit module de commutation de mode de connexion (52) connectant les batteries (903) en parallèle et permettant la transmission de l'énergie qui est reçue des batteries (903) qui ont été connectées en parallèle audit module de commutation de charge et de décharge (51) et la transmission de l'énergie qui est reçue dudit module de commutation de charge et de décharge (51) aux batteries (903) qui ont été connectées en parallèle ;
lorsque ledit module de commutation de mode de connexion (52) fonctionne en mode d'alimentation d'une seule batterie (523), ledit module de commutation de mode de connexion (52) permettant la transmission de l'énergie qui est reçue de la batterie (903) déterminée comme étant rechargeable audit module de commutation de charge et de décharge (51) et la transmission de l'énergie qui est reçue dudit module de commutation de charge et de décharge (51) à la batterie (903) qui est déterminée comme étant rechargeable ; et
un module d'analyse (53) couplé à ladite unité de détection de la polarité de la batterie (3) et ladite unité de détection du type de batterie (4) étant conçue pour recevoir le premier et le second résultat de détection, et couplée en outre audit module de commutation de charge et de décharge (51) et audit module de commutation de mode de connexion (52) ;
ledit module d'analyse (53) commandant, sur la base de l'analyse du premier et du second résultat de détection, la commutation dudit module de commutation de charge et de décharge (51) entre l'état DÉSACTIVÉ (511) et l'état ACTIVÉ (512) et la commutation dudit module de commutation de mode de connexion (52) entre le mode de connexion parallèle (521) et le mode d'alimentation d'une seule batterie (523).

3. Dispositif de protection contre la charge et la décharge de la batterie (200) selon la revendication 2, **caractérisé en ce que** :
les modes de connexion comportent en outre un mode de connexion en série (522) ;
lorsque ledit module de commutation de mode de connexion (52) fonctionne en mode de connexion en série (522), ledit module de commutation de mode de connexion (52) connecte les batteries (903) en série et permet la transmission de l'énergie qui est reçue des batteries (903) qui ont été connectées en série audit module de commutation de charge et de décharge (51) ;
ledit module d'analyse (53), lors de la détermination, sur la base du premier résultat de détection, que les deux batteries (903) sont correctement installées et de la détermination, sur la base du second résultat de détection, que les deux batteries (903) ne sont pas rechargeables, commande ledit module de commutation de mode de connexion (52) pour qu'il fonctionne en mode de connexion en série (522) ;
ladite unité de commande de charge et de décharge (5) comporte en outre un module de commande de charge (54) qui est conçu pour être couplé au dispositif chargeur (902) et qui est en outre couplé audit module d'analyse (53) ;
lorsque ledit module d'analyse (53) commande ledit module de commutation de mode de connexion (52) pour qu'il fonctionne dans l'un quelconque parmi le mode de connexion parallèle (521) et le mode d'alimentation d'une seule batterie (523), ledit module de commande de charge (54) commande le dispositif chargeur (902) pour qu'il délivre de l'énergie audit module de commutation de charge et de décharge (51).

4. Dispositif de protection contre la charge et la décharge de la batterie (200) selon la revendication 3, **caractérisé en ce que** :
le second résultat de détection comporte deux seconds signaux de détection qui correspondent respectivement aux batteries (903), et chacun d'eux indique si la batterie (903) qui correspond au second signal de détection est rechargeable ou non rechargeable ; et
ledit module d'analyse (53) comporte
un premier circuit logique (536) couplé à ladite unité de détection de la polarité de la batterie (3) pour recevoir le premier résultat de détection, couplé en outre audit module de commutation de charge et de décharge (51), et générant, sur la base du premier résultat de détection, un premier signal logique qui indique si les deux batteries (903) sont correctement installées et qui est destiné à être reçu par ledit module de commutation de charge et de décharge (51),
le premier signal logique, lorsqu'il indique que les deux batteries (903) sont correctement installées, fait fonctionner ledit module de commutation de charge et de décharge (51) dans l'état ACTIVÉ (512),
un deuxième circuit logique (537) couplé à ladite unité de détection du type de batterie (4) pour recevoir le second résultat de détection, couplé en outre audit module de commutation de mode de connexion (52), et générant, sur la base du second résultat de détection, un deuxième signal logique qui indique si les deux batteries (903) sont non rechargeables et qui est destiné à être reçu par ledit module de commutation de mode de connexion (52),
le deuxième signal logique, lorsqu'il indique que les deux batteries (903) ne sont pas rechargeables, fait fonctionner ledit module de commutation de mode de connexion (52) en mode de connexion en série (522), et
deux troisièmes circuits logiques (538) correspondant respectivement aux batteries (903),
par rapport à chacune des batteries (903), ledit troisième circuit logique (538) qui correspond à la batterie (903) étant couplé audit premier circuit logique (536) et à ladite unité de détection du type de batterie (4) pour recevoir le premier signal logique et le second signal de détection correspondant à la batterie (903), étant en outre couplé audit module de commutation de mode de connexion (52), et générant un troisième signal logique destiné à être reçu par ledit module de commutation de mode de connexion (52) sur la base du premier signal logique et du second signal de détection qui correspond à la batterie (903),
lorsque le premier signal logique indique que les deux batteries (903) sont correctement installées, et lorsque les seconds signaux de détection indiquent collectivement que les deux batteries (903) sont rechargeables, les troisièmes signaux logiques qui sont respectivement générés par lesdits troisièmes circuits logiques (538) amènent collectivement ledit module de commutation de mode de connexion (52) à fonctionner en mode de connexion parallèle (521),
lorsque le premier signal logique indique que les deux batteries (903) sont correctement installées, et lorsque les seconds signaux de détection indiquent collectivement qu'une seule des batteries (903) est rechargeable, les troisièmes signaux logiques qui sont respectivement générés par lesdits troisièmes circuits logiques (538) amènent collectivement ledit module de commutation de mode de connexion (52) à fonctionner en mode d'alimentation d'une seule batterie (523).

5. Dispositif de protection contre la charge et la décharge de la batterie (200) selon la revendication 4, **caractérisé en ce que** :
ledit module de commutation de mode de connexion (52) comporte un circuit de mode de connexion en série (527) et un circuit de mode de connexion en parallèle (524) ;
chacun parmi ledit circuit de mode de connexion en série (527) et ledit circuit de mode de connexion en parallèle (524) est conçu pour être couplé aux batteries (903), et est en outre couplé audit module de commutation de charge et de décharge (51) ;
lorsque ledit module de commutation de mode de connexion (52) fonctionne en mode de connexion en série (522), ledit circuit de mode de connexion en série (527) connecte les batteries (903) en série et permet la transmission de l'énergie qui est reçue des batteries (903) qui ont été connectées en série audit module de commutation de charge et de décharge (51) ;
ledit circuit de mode de connexion parallèle (524) comporte deux premiers commutateurs (525) qui sont conçus pour être respectivement couplés aux batteries (903), et un sous-circuit de connexion parallèle (526) qui est couplé auxdits premiers commutateurs (525) et audit module de commutation de charge et de décharge (51) ;
chacun desdits premiers commutateurs (525) est en outre couplé audit troisième circuit logique (538) qui correspond à la batterie (903) couplée audit premier commutateur (525) pour recevoir le troisième signal logique, et fonctionne pour connecter la batterie (903) qui est couplée audit premier commutateur (525) audit sous-circuit de connexion parallèle (526) lorsque le troisième signal logique indique que les deux batteries (903) sont correctement installées et que la batterie (903) couplée audit premier commutateur (525) est rechargeable ;
lorsque lesdits deux premiers commutateurs (525) fonctionnent, ledit sous-circuit de connexion parallèle (526) connecte les batteries (903) en parallèle et permet la transmission de l'énergie qui est reçue des batteries (903) qui ont été connectées en parallèle audit module de commutation de charge et de décharge (51) et la transmission de l'énergie qui est reçue du module de commutation de charge et de décharge (51) aux batteries (903) qui ont été connectées en parallèle ;
lorsqu'un seul desdits premiers commutateurs (525) fonctionne, ledit sous-circuit de connexion parallèle (526) permet la transmission de l'énergie qui est reçue de la batterie (903) connectée audit sous-circuit de connexion parallèle (526) audit module de commutation de charge et de décharge (51) et la transmission de l'énergie qui est reçue dudit module de commutation de charge et de décharge (51) à la batterie (903) qui est connectée audit sous-circuit de connexion parallèle (526).

6. Dispositif de protection contre la charge et la décharge de la batterie (200) selon la revendication 5, **caractérisé en ce que** :
ledit circuit de mode de connexion en série (527) comporte deux seconds commutateurs (528) qui sont conçus pour être respectivement couplés aux batteries (903), et un sous-circuit de connexion en série (529) qui est couplé auxdits seconds commutateurs (528) et audit module de commutation de charge et de décharge (51) ;
chacun desdits seconds commutateurs (528) est en outre couplé audit deuxième circuit logique (537) pour recevoir le deuxième signal logique, et fonctionne pour connecter la batterie (903) qui est couplée audit second commutateur (528) audit sous-circuit de connexion en série (529) lorsque le deuxième signal logique indique que les deux batteries (903) ne sont pas rechargeables ;
lorsque lesdits deux seconds commutateurs (528) fonctionnent, le sous-circuit de connexion en série (529) connecte les batteries (903) en série et permet la transmission de l'énergie qui est reçue des batteries (903) qui ont été connectées en série audit module de commutation de charge et de décharge (51).

7. Dispositif de protection contre la charge et la décharge de la batterie (200) selon l'une quelconque des revendications 4 à 6, **caractérisé en ce que** ledit module de commande de charge (54) est couplé auxdits troisièmes circuits logiques (538) pour recevoir les troisièmes signaux logiques, et commande le dispositif chargeur (902) pour qu'il délivre de l'énergie audit module de commutation de charge et de décharge (51) lorsque les troisièmes signaux logiques amènent collectivement ledit module de commutation de mode de connexion (52) à fonctionner dans l'un quelconque parmi le mode de connexion parallèle (521) et le mode d'alimentation d'une seule batterie (523).
